# EUROPEAN PATENT SPECIFICATION

(11) **EP 3 697 831 B1**
(45) Date of publication and mention of the grant of the patent: **22.05.2024**
(21) Application number: 18785678.6
(22) Date of filing: 18.10.2018
(51) Int. Cl.: C08G 69/26

(54) **POLYAMIDE COPOLYMER, PROCESS FOR PREPARATION, AND MOLDED PARTS MADE THEREOF**
POLYAMID-COPOLYMER, VERFAHREN ZUR HERSTELLUNG UND DARAUS HERGESTELLTE FORMTEILE
COPOLYMÈRE DE POLYAMIDE, PROCÉDÉ DE PRÉPARATION ET PIÈCES MOULÉES FABRIQUÉES À PARTIR DE CELUI-CI

(30) Priority: 20.10.2017 EP 17197524
(43) Date of publication of application: 26.08.2020
(73) Proprietor: DSM IP Assets B.V., 6411 TE Heerlen (NL)
(72) Inventor: JANSSEN, Pim Gerard Anton, 6100 AA Echt (NL)
(74) Representative: Envalior Association
(86) International application number: PCT/EP2018/078618
(87) International publication number: WO 2019/077067

(56) References cited:
- WO-A1-01/25311
- WO-A1-2015/107024
- US-A1- 2016 280 914

## Description

The present invention relates to a polyamide copolymer, more particular to a semi-crystalline semi-aromatic polyamide. The invention further relates to a process for preparing the copolymer, a process for making molded parts from the copolymer and molded parts comprising the same. The invention in particular relates to extrusion molded parts.

Semi-crystalline semi-aromatic polyamides, in particular those polyamides based on terephthalic acid, also known as PPAs, belong to the high-end performance of thermoplastic polymers. Important properties of PPAs are chemical resistance and mechanical properties at high temperature, as well as high temperature performance in terms of retention of strength and toughness during exposure to hot, aggressive conditions such as exposure to hot automotive fluids and hot air, whether humid or dry. PPAs are thermoplastic polymers having amorphous domains characterized by a glass transition temperature (Tg), and crystalline domains characterized by a melting temperature (Tm). Compared to aliphatic polyamides, which are also semi-crystalline thermoplastic polymers, the Tm and Tg of PPAs is relatively high. The chemical nature of the components and the relatively high Tg and Tm of PPAs can explain for the better performance in terms of chemical resistance and mechanical properties at high temperature of the PPAs. A disadvantage of PPAs, compared to aliphatic polyamides, is that in general processing is more difficult, not in the last part since processing is typically done above the melting temperature, thus at higher temperatures. Measures to keep the melting temperature of PPAs sufficiently low to allow for good processing are generally accompanied with a reduction in chemical resistance and/or mechanical properties at high temperature. Typically, such measures consist of using a combination of different monomers for the preparation, the resulting PPAs thereof being typified as polyamide copolymers.

The aim of the present invention is to provide a semi-crystalline semi-aromatic polyamide copolymer that has an improved balance in mechanical properties at high temperature while having good chemical resistance and good processing performance, in particular a good in extrusion.

This aim has been achieved with the polyamide copolymer according to the present invention, consisting of repeat units derived from polyamide forming monomers consisting of
- 55 - 90 mole% of 1,6-hexanediamine (referred to as HMDA) and 10-45 mole% of either one of 1,2-ethylenediamine, 1,3-trimethylenediamine, 1,4-tetramethylenediamine and 1,5-pentamethylenediamine, or a combination thereof (referred to as C2-C5 diamine), the mole% being relative to the combined molar amount of HMDA and C2-C5 diamine;
- 50 - 85 mole% of terephthalic acid (referred to as TPA) and 15 - 50 mole% of isophthalic acid (referred to as IPA), the mole % being relative to the combined molar amount of TPA and IPA;
- 0-10 mole % of other polyamide forming monomer or monomers, the mole % being relative to the total molar amount of polyamide forming monomers.

This polyamide copolymer is a semi-crystalline semi-aromatic polyamide copolymer derived from polyamide forming monomers based on diamines and dicarboxylic acids, or based on diamines, dicarboxylic acids and other monomers.

With a polyamide copolymer is herein understood a polyamide comprising repeat units of derived from at least diamine and diacid monomers, wherein the diamine and diacid monomers comprise more than one diamine or more than one dicarboxylic acid, or both more than one diamine or more than one dicarboxylic acid. Polyamide copolymer is also referred to as copolyimide.

Even though a combination of multiple monomers is used, resulting in lowering of the melting point and of the crystallinity, the polyamide copolymer according to the invention has surprisingly good properties. The effect of the copolyamide based on the diamines and dicarboxylic acids in the said molar percentages as mentioned above, is that the copolyamide has very good tensile properties, such as high tensile strength and high elongation at break, as well as a high ductility, very good resistance against environmental stress cracking, good high temperature mechanical properties, while allowing for tuning the processing conditions and applying a lower extrusion temperature, resulting in a more stable extrusion process.

The polyamide copolymer according to the invention suitably has one or more of the following thermal properties:
- a melting temperature (Tm) in the range of 275 - 335 °C; and/or
- a melting enthalpy (ΔHm) in the range of 30-90 J/g; and/or a
- a glass transition temperature (Tg) in the range of 110-160°C.

Herein, the melting temperature is measured by the DSC method according to ISO-11357-1/3, 2011, on pre-dried samples in an N₂ atmosphere with heating and cooling rate of 20°C/min. Herein Tm has been calculated from the peak value of the highest melting peak in the second heating cycle.

Herein the glass transition temperature (Tg) is measured by the differential scanning calorimetry (DSC) method according to ISO-11357-1/2, 2011, on pre-dried samples in an N2 atmosphere with a heating and cooling rate of 20°C/min. Herein Tg has been calculated from the value at the peak of the first derivative (in respect of temperature) of the parent thermal curve corresponding with the inflection point of the parent thermal curve in the second heating cycle.

Herein the melting enthalpy (ΔHm) is measured by the DSC method according to ISO-11357-1/3, 2011, on pre-dried samples in an N₂ atmosphere with heating and cooling rate of 20°C/min. Herein ΔHm has been calculated from the surface under the melting peak in the second heating cycle.

With a semi-aromatic polyamide is herein understood a polyamide comprising repeat units derived from aromatic monomers (i.e. monomers comprising an aromatic group or backbone) and aliphatic monomers (i.e. monomers comprising an aliphatic backbone). Herein the monomers comprising an aromatic backbone may be, for example, an aromatic dicarboxylic acid, or an aromatic diamine, or an arylalkyl diamine, or any combination thereof.

The polyamide copolymer according to the invention comprises repeat units primarily derived from the diamines 1,6-hexanediamine and one or more of 1,2-ethylenediamine, 1,3-trimethylenediamine, 1,4-tetramethylenediamine and 1,5-pentamethylenediamine, and the dicarboxylic acids terephthalic acid and isophthalic acid.

The polyamide copolymer may comprise small amounts of repeat units derived from other monomers, i.e. polyamide forming monomers other than 1,2-ethylenediamine, 1,3-trimethylenediamine, 1,4-tetramethylenediamine, 1,5-pentamethylenediamine 1,6-hexanediamine, terephthalic acid and isophthalic acid.

However, the amount of repeat units derived from other polyamide forming monomers shall be kept limited. The other monomers are present, if at all, in an amount in the range of 0 - 10 mole%, preferably 0 - 5 mole% and even more preferably 0 - 2.5 mole%, relative to the total molar amount of polyamide forming monomers.

Thus, the polyamide forming monomers may comprise one, or more than one diamine, other than the said diamines 1,2-ethylenediamine, 1,3-trimethylenediamine, 1,4-tetramethylenediamine, 1,5-pentamethylenediamine 1,6-hexanediamine. Furthermore, the polyamide forming monomers may also comprise one or more than one monomer other than diamines and dicarboxylic acids.

In line with the above, the polyamide copolymer may comprise repeat units derived from other dicarboxylic acids; for example, 4,4'-biphenyldicarboxylic acid or naphthalene dicarboxylic acid, or a mixture thereof.

The polyamide copolymer may also, or alternatively, comprise repeat units derived from other diamines, for example linear aliphatic diamines with at least 7 carbon atoms, [for example 1,7-heptamethylenediamine, 1,8-octamethylenediamine, 1,9-nonane diamine, 1,10-decanediamine, 1,11-undecane- diamine, 1,12-dodecanediamine and 1,18-octadecanediamine], branched aliphatic diamines [for example 2-methylpentamethylendiamine, 2,2,4-trimethyl-hexamethylene diamine, 2,4,4-trimethylhexamethylenediamine, and 2-methyl-1,8-octanediamine], and cycloaliphatic diamines [for example 1,4-diaminocyclohexane, 4,4'-methylene-bis(cyclohexylamine) (PAC), 3,3'-dimethyl-4,4'-diaminocyclohexyl-methane (MAC); 3,3',5,5'-tetramethyl-4,4'-diaminocyclohexylmethane; 2,2',3,3'-tetramethyl-4,4'-diaminocyclohexylmethane; norbornanediamine; and isophoronediamine (IPD)].

The polyamide copolymer may also comprise repeat units derived from monomers other than dicarboxylic acid and diamine. Typically, such other monomers bear at least an amine functional group and/or a carboxylic acid functional group. Examples include monofunctional carboxylic acids, trifunctional carboxylic acids, monofunctional and trifunctional amines, cyclic lactams and α,ω-aminoacids, and combinations thereof.

In case the polyamide forming monomer comprise one or more than one monomer other than HMDA, C2-C5 diamine, TPA and IPA, such other monomer preferably comprises at least 50 mole% and preferably 75 - 100 mole% of a linear aliphatic C7-C18 diamine. With a CX diamine is herein understood a diamine with X carbon atoms, wherein X is an integer. For example, when X is 12, the diamine is 1,12-dodecanediamine.

In a preferred embodiment, the polyamide forming monomers comprise 65 - 85 mole% of 1,6-hexanediamine (HMDA) and 15 - 35 mole% of either one of 1,2-ethylenediamine, 1,3-trimethylenediamine, 1,4-tetramethylenediamine and 1,5-pentamethylenediamine, or a combination thereof (C2-C5 diamine). More preferably, these diamines comprise 10 - 45 mole% of one of 1,4-tetramethylenediamine and 1,5-pentamethylenediamine, or a combination thereof. Herein the mole% is relative to the combined molar amount of HMDA and C2-C5 diamine.

In another preferred embodiment, the polyamide forming monomers comprise 60 - 80 mole% of terephthalic acid (TPA) and 20 - 40 mole% of isophthalic acid (IPA). Herein the mole% is relative to the combined molar amount of TPA and IPA.

The semi-crystalline semi-aromatic polyamide copolymer according to the invention suitably has a viscosity number (VN) of at least 70, preferably at least 80 and more preferably at least 90. The VN is herein measured in 96% sulphuric acid with a polymer concentration of 0.005 g/ml at 25°C by the method according to ISO 307, fourth edition. The advantage of a higher VN is that the copolymer and products made thereof have better mechanical properties and an even better resistance against environmental stress factors. The viscosity number may be as high as 200 or even higher, but preferably is at most 160, more preferably in the range of 100 - 150. In this range, the copolymer has the optimal combination of high temperature properties and processability.

The polyamide copolymer according to the invention may be prepared by any process suitable for preparing thermoplastic semi-crystalline semi-aromatic polyamides. Suitably, the polyamide copolymer is prepared by a melt process, or by a combined process wherein in a first step a polyamide oligomer is prepared by melt-polymerization from the starting monomers or salts thereof, followed by a step wherein the polyamide oligomer is further polymerized in a solid-state post condensation to produce the polyamide copolymer.

In another preferred process, the polyamide copolymer is prepared by process steps comprising the steps of
(i) Providing a semi-crystalline semi-aromatic polyamide (A) comprising repeat units derived from 85 - 100 mole% of terephthalic acid (referred to as TPA) and 0-15 mole% of isophthalic acid (referred to as IPA), the mole % being relative to the combined molar amount of TPA and IPA;
(ii) Providing an amorphous semi-aromatic polyamide (B) comprising repeat units derived from 0 - 50 mole% of terephthalic acid (referred to as TPA) and 50 - 100 mole% of isophthalic acid (referred to as IPA), the mole % being relative to the combined molar amount of TPA and IPA; and
(iii) Melt-mixing (A) and (B) and keeping (A) and (B) in the melt at a temperature (Tmelt) above the melting temperature (Tm) of (A) for a time sufficiently long to react (A) and (B) and to form the polyamide copolymer.

Herein (A) can be produced by any process suitable for preparing semi-crystalline semi-aromatic polyamides. Preferably (A) is prepared by direct solid-state polymerization applying a polymerization temperature below the melting temperature of (A). (B) can be produced, for example, by melt polymerization applying a polymerization temperature above the glass transition temperature of (B). The copolymer can be prepared by melt-mixing and transamidation of (A) and (B), applying a melt temperature (Tmelt) above the melting temperature (Tm) of the copolymer. The advantage of this process is that the copolymer is produced in such a manner that the copolymer is exposed for a relatively very short time to a temperature above the melt temperature of the copolymer, compared to other melt processes and that the copolymer is produced in a very efficient manner. The production of a copolymer resulting from such a transamidation process can be simply deduced from the reduction of the melting temperature measured on the product.

Herein (A) and (B) can be mixed in a ratio varying over a wide range, provided that the combination of monomeric repeat units is such that the molar amounts thereof fall within the ranges as defined for the polyamide copolymer of the present invention. Suitably, (A) and (B) are mixed in a weight ratio within the range of 90:10 - 15:85, preferably 85:15 - 25:75, more preferably 80:20 - 40:60.

Suitable, the amorphous semi-aromatic polyamide (B) is suitably rich in repeat units derived from both 1,6-hexanediamine (HMDA) and isophthalic acid (IPA). Similarly, the semi-crystalline semi-aromatic polyamide (A) is rich in repeat units derived from both a C2-C5 diamine and terephthalic acid (TPA).

In a preferred embodiment of the said process, the semi-crystalline semi-aromatic polyamide (A) consists of repeat units primarily derived from polyamide forming monomers comprising primarily diamine and dicarboxylic acid, wherein
- the diamine comprises 40 - 80 mole% of 1,6-hexanediamine (HMDA) and 60 - 20 mole% of either one of 1,2-ethylenediamine, 1,3-trimethylenediamine, 1,4-tetramethylenediamine and 1,5-pentamethylenediamine, or a combination thereof (C2-C5 diamine), the mole% being relative to the combined molar amount of HMDA and C2-C5 diamine; and
- the dicarboxylic acid comprises 90 - 100 mole% of terephthalic acid and 10-0 mole% of isophthalic acid, the mole % being relative to the combined molar amount of TPA and IPA;
- the polyamide forming monomers comprise 0-10 mole%, relative to the total molar amount of polyamide forming monomers, of monomers other than 1,2-ethylenediamine, 1,3-trimethylenediamine, 1,4-tetramethylenediamine, 1,5-pentamethylenediamine 1,6-hexanediamine, terephthalic acid and isophthalic acid.

In another preferred embodiment of the said process, the amorphous semi-aromatic polyamide (B) consists of repeat units derived from polyamide forming monomers comprising primarily diamine and dicarboxylic acid, wherein
- the diamine consists of 70 - 100 mole% of 1,6-hexanediamine and 30 - 0 mole% of other diamines, the mole% being relative to the total molar amount of diamine; and
- the dicarboxylic acid comprises 20 - 45 mole% of terephthalic acid and 55 - 80 mole% of isophthalic acid, the molar percentage (mole%) of the dicarboxylic acids is relative to the total molar amount of dicarboxylic acid;
- and the polyamide forming monomers comprise 0 - 5 mole%, relative to the total molar amount of polyamide forming monomers, of monomers other than diamine, terephthalic acid and isophthalic acid.

In a further preferred embodiment, the above two preferred embodiments are combined.

The copolymer according to the invention can be used, either as such or as part of a composition, in different molding processes for making molded products. The copolymer can be used, for example in injection molded products produced by injection molding, as well as in extruded parts, produced by extrusion molding. The extruded part suitably is a tape, a tube, or an extruded profile, and preferably is a tube.

The invention also relates to a polymer composition comprising the semi-crystalline semi-aromatic polyamide copolymer and at least one other component, as well as to molded parts made thereof. The molded parts can be, for example, injection molded products, as well as extruded parts.

The invention is further illustrated with the following examples and comparative experiments.

### Starting Materials

| | |
|---|---|
| sc-PPA-1 | PA 6T/4T semi-crystalline semi-aromatic (60mol % 6T/40 mol%4T), VN of 100, Tg 150°C and Tm 337°C, ex DSM |
| sc-PPA-2 | PA 6T/4T semi-crystalline semi-aromatic (60mol % 6T/40 mol%4T), VN of 80, Tg 151 °C and Tm 338°C, ex DSM |
| sc-PPA-3 | PA 6T/4T/66 (ratio 50/34/16 mole%) semi-crystalline semi-aromatic copolymer with a melting temperature of 325 °C, VN 80 ml/g , ex DSM. |
| am-PPA | PA 6I/6T amorphous semi-aromatic copolyamide 50 mole% 1,6-hexanediamine, 35 mole% isophthalic acid and 15 mole% terephthalic acid), Tg 127°C, ex DSM. |

### Polymer preparation for Examples 1 and 2 (CE-1 and 2) and Comparative Experiments A and B (CE-A and CE-C)

The polyamides were prepared by melt mixing the polymers sc-PPA-1, sc-PPA-2 and am-PPA in the desired ratio on a Berstorff ZE25/48 UTX (a co-rotating twin-screw extruder) operating at 350 rpm and using a wall temperature setting of 360°C. All polymeric materials were fed to the feed-throat of the extruder. The settings used resulted in a temperature of the melt exiting the die-head of approximately 370-380°C. The mean residence time of the molten polymers in the extruder was about 120 seconds.

### Test methods

### Viscosity Number (VN)

The VN was measured in 96% sulphuric acid with a polymer concentration of 0.005 g/ml at 25 °C by the method according to ISO 307, fourth edition.

### Determination of melting temperature by DSC according to ISO-11357-1/3, (2011).

The measurements of the melting temperature (Tm) were carried out with a Mettler Toledo Star System (DSC) using a heating and cooling rate of 20°C/min in an N2 atmosphere. For the measurements, a sample of about 5 mg pre-dried powdered polymer was used. The pre-drying was carried out at high vacuum, i.e less than 50 mbar and at 105°C during 16 hrs. The sample was heated from 0°C to 360 °C with a heating rate of 20 °C/min, immediately cooled to 0°C with a cooling rate of 20°C/min and subsequently heated again at 20°C/min to 360°C. For the melting temperature Tm the peak value of the melting peak in the second heating cycle was determined. For the melting enthalpy ΔHm the melting enthalpy of the melting peak in the second heating cycle was determined.

### Glass transition temperature by DSC (according to ISO-11357-2 (2013)

The measurements of the glass transition temperature (Tg) were carried out with a Mettler Toledo Star System (DSC) using a heating and cooling rate of 20°C/min in an N2 atmosphere in the same way as described above for the Tm. Herein the Tg was determined as the temperature at the peak of the first derivative (with respect of time) of the parent thermal curve corresponding with the inflection point of the parent thermal curve for the second heating cycle

### Mechanical properties

Mechanical properties (tensile modulus [MPa], tensile strength [MPa], elongation at break [%]) were measured in a tensile test according to ISO 527-1/2:2012 with a drawing speed of 50 mm/min at a temperature of 23°C. For the tests test bars conforming 527-type-1A were used, which were molded at Tm + 15°C barrel and nozzle set temperatures and with a tool temperature of 120°C.

**Table 1. Composition and test results for the copolymers of Examples 1-2 and comparative experiments A-E.**

| | EX-1 | CE-A | CE-B | EX-2 | CE-C | CE-D | CE-E |
|---|---|---|---|---|---|---|---|
| Sc-PPA-1 | 65 | 85 | 100 | | | | |
| Sc-PPA-2 | | | | 65 | 85 | 100 | |
| Sc-PPA-3 | | | | | | | 100 |
| Am-PPA | 35 | 15 | | 35 | 15 | | |
| mol% T | 76 | 90 | 100 | 76 | 90 | 100 | 85 |
| mol% 6 | 0 | 0 | 0 | 0 | 0 | 0 | 15 |
| mol% I | 24 | 10 | 0 | 24 | 10 | 0 | 0 |
| Tm (°C) | 310 | 335 | 340 | 310 | 335 | 340 | 325 |
| Tg (°C) | 138 | 145 | 150 | 138 | 145 | 150 | 125 |
| ΔHm (J/g) | 57 | 66 | 76 | 60 | 70 | 82 | 73 |
| VN (ml/g) | 98 | 97 | 101 | 82 | 78 | 81 | 76 |
| TM (MPa) | 3.3 | 3.9 | 3.9 | 3.9 | 4 | 3.9 | 4.1 |
| TS (MPa) | 91 | 50 | 65 | 70 | 52 | 49 | 52 |
| EB (%) | 4.3 | 1.3 | 1.65 | 2 | 1.4 | 1.33 | 1.32 |

The copolymers of the examples according to the invention show much better mechanical properties (Tensile Strength and Elongation at Break) than those of the comparative experiments.

### Extrusion

The copolymers of the Examples and of the Comparative Experiments were melt extruded into tubes with an inner diameter of about 4 mm and an outer diameter of about 5 mm in a melt extrusion apparatus applying standard processing conditions. The copolymers of the Examples I and II showed a more stable processing behavior and resulted in better quality tubes than for the copolymers of the Comparative Experiments A-E.

## Claims

1. Polyamide copolymer consisting of repeat units derived from polyamide forming monomers consisting of
- 55 - 90 mole% of 1,6-hexanediamine (referred to as HMDA) and 10 - 45 mole% of either one of 1,2-ethylenediamine, 1,3-trimethylenediamine, 1,4-tetramethylenediamine and 1,5-pentamethylenediamine, or a combination thereof (together referred to as C2-C5 diamine), the mol % being relative to the combined molar amount of HMDA and C2-C5 diamine;
- 50 - 85 mole% of terephthalic acid (referred to as TPA) and 15 - 50 mole% of isophthalic acid (referred to as IPA), the mole % being relative to the combined molar amount of TPA and IPA;
- 0-10 mole % of other polyamide forming monomer or monomers, the mole % being relative to the total molar amount of polyamide forming monomers.

2. Polyamide copolymer according to claim 1, wherein the polyamide copolymer is a semi-crystalline polymer having
- a melting temperature (Tm) in the range of 275 - 335 °C; and/or
- a melting enthalpy (ΔHm) in the range of 30-90 J/g; and/or a
- a glass transition temperature (Tg) in the range of 110-160°C.
wherein the melting temperature and the melting enthalpy are measured by the DSC method according to ISO-11357-1/3, 2011, and the glass transition temperature is measured by the differential scanning calorimetry (DSC) method according to ISO-11357-1/2, 2011, all with a heating and cooling rate of 20°C/min.

3. Polyamide copolymer according to claim 1 or 2, wherein the polyamide forming monomers comprise 0-5 mole%, relative to the total molar amount of polyamide forming monomers, of other polyamide forming monomers.

4. Polyamide copolymer according to any of claims 1-3, wherein the polyamide forming monomers comprise 65 - 85 mole% of 1,6-hexanediamine (HMDA) and 15 - 35 mole% of either one of 1,2-ethylenediamine, 1,3-trimethylenediamine, 1,4-tetramethylenediamine and 1,5-pentamethylenediamine, or a combination thereof (C2-C5 diamine), relative to the combined molar amount of HMDA and C2-C5 diamine.

5. Polyamide copolymer according to any of claims 1-4, wherein the polyamide forming monomers comprise 60 - 80 mole% of terephthalic acid (TPA) and 20 - 40 mole% of isophthalic acid (IPA), relative to the combined molar amount of TPA and IPA.

6. Process for preparing a polyamide copolymer as defined in any of claims 1-5, comprising a melt-mixing and transamidation step or a melt-polymerization step.

7. Process according to claim 6, comprising the steps of
(i) Providing a semi-crystalline semi-aromatic polyamide (A) comprising repeat units derived from 85 - 100 mole% of terephthalic acid (referred to as TPA) and 0-15 mole% of isophthalic acid (referred to as IPA), the mole % being relative to the combined molar amount of TPA and IPA;
(ii) Providing an amorphous semi-aromatic polyamide (B) comprising repeat units derived from 0-50 mole% of terephthalic acid (referred to as TPA) and 50 - 100 mole% of isophthalic acid (referred to as IPA), the mole % being relative to the combined molar amount of TPA and IPA;
(iii) Melt-mixing (A) and (B) and keeping (A) and (B) in the melt at a temperature (Tmelt) above the melting temperature (Tm) of (A) for a time sufficiently long to react (A) and (B) and form the polyamide copolymer.

8. Process according to claim 7, wherein (A) and (B) are mixed in a weight ratio within the range of 90:10 - 15:85, preferably 85:15 - 25:75, more preferably 80:20 - 40:60.

9. Process for making a molded part, comprising injection molding or extrusion molding a polyamide copolymer as defined in any of claims 1-5, or a polymer composition comprising a polyamide copolymer as defined in any of claims 1-5.

10. Process according to claim 9, wherein the molded part is made by extrusion molding.

11. Molded part, comprising a polyamide copolymer as defined in any of claims 1-5, or a polymer composition comprising a polyamide copolymer as defined in any of claims 1-5.

12. Molded part according to claim 11, wherein the molded part is an extruded part, produced by extrusion molding.

13. Molded part according to claim 12, wherein the extruded part is a tape, a tube, or an extruded profile, and preferably is a tube.

## Patentansprüche

1. Polyamid-Copolymer, bestehend aus Wiederholungseinheiten, die sich von polyamidbildenden Monomeren ableiten, bestehend aus
- 55-90 Mol-% 1,6-Hexandiamin (als HMDA bezeichnet) und 10-45 Mol-% eines von 1,2-Ethylendiamin, 1,3-Trimethylendiamin, 1,4-Tetramethylendiamin und 1,5-Pentamethylendiamin oder einer Kombination davon (zusammen als C2-C5-Diamin bezeichnet), wobei sich die Mol-%-Angaben auf die kombinierte molare Menge von HMDA und C2-C5-Diamin beziehen;
- 50-85 Mol-% Terephthalsäure (als TPA bezeichnet) und 15-50 Mol-% Isophthalsäure (als IPA bezeichnet), wobei sich die Mol-%-Angaben auf die kombinierte molare Menge von TPA und IPA beziehen;
- 0-10 Mol-% eines oder mehrerer anderer polyamidbildender Monomere, wobei sich die Mol-%-Angabe auf die gesamte molare Menge polyamidbildender Monomere bezieht.

2. Polyamid-Copolymer nach Anspruch 1, wobei es sich bei dem Polyamid-Copolymer um ein teilkristallines Polymer mit
- einer Schmelztemperatur (Tm) im Bereich von 275-335 °C und/oder
- einer Schmelzenthalpie (ΔHm) im Bereich von 30-90 J/g und/oder
- einer Glasübergangstemperatur (Tg) im Bereich von 110-160 °C
handelt, wobei die Schmelztemperatur und die Schmelzenthalpie nach der DSC-Methode gemäß ISO-11357-1/3, 2011, gemessen wird und die Glasübergangstemperatur durch die DSC-Methode (DSC = dynamische Differenzkalorimetrie) gemäß ISO-11357-1/2, 2011, gemessen wird, alle mit einer Aufheiz- und Abkühlungsrate von 20 °C/min.

3. Polyamid-Copolymer nach Anspruch 1 oder 2, wobei die polyamidbildenden Monomere 0-5 Mol-%, bezogen auf die gesamte molare Menge polyamidbildender Monomere, anderer polyamidbildender Monomere umfassen.

4. Polyamid-Copolymer nach einem der Ansprüche 1 bis 3, wobei die polyamidbildenden Monomere 65-85 Mol-% 1,6-Hexandiamin (HMDA) und 15-35 Mol-% eines von 1,2-Ethylendiamin, 1,3-Trimethylendiamin, 1,4-Tetramethylendiamin und 1,5-Pentamethylendiamin oder einer Kombination davon (C2-C5-Diamin), bezogen auf die kombinierte molare Menge von HMDA und C2-C5-Diamin, umfassen.

5. Polyamid-Copolymer nach einem der Ansprüche 1-4, wobei die polyamidbildenden Monomere 60-80 Mol-% Terephthalsäure (TPA) und 20-40 Mol-% Isophthalsäure (IPA), bezogen auf die kombinierte molare Menge von TPA und IPA, umfassen.

6. Verfahren zur Herstellung eines Polyamid-Copolymers gemäß einem der Ansprüche 1-5, umfassend einen Schmelzemisch- und Umamidierungsschritt oder einen Schmelzepolymerisationsschritt.

7. Verfahren nach Anspruch 6, umfassend die Schritte:
(i) Bereitstellen eines teilkristallinen teilaromatischen Polyamids (A), umfassend Wiederholungseinheiten, die sich von 85-100 Mol-% Terephthalsäure (als TPA bezeichnet) und 0-15 Mol-% Isophthalsäure (als IPA bezeichnet) ableiten, wobei sich die Mol-%-Angaben auf die kombinierte molare Menge von TPA und IPA beziehen;
(ii) Bereitstellen eines amorphen teilaromatischen Polyamids (B), umfassend Wiederholungseinheiten, die sich von 0-50 Mol-% Terephthalsäure (als TPA bezeichnet) und 50-100 Mol-% Isophthalsäure (als IPA bezeichnet) ableiten, wobei sich die Mol-%-Angaben auf die kombinierte molare Menge von TPA und IPA beziehen;
(iii) Schmelzemischen von (A) und (B) und Halten von (A) und (B) in der Schmelze bei einer Temperatur (TSchmelze) oberhalb der Schmelztemperatur (Tm) von (A) über einen für die Reaktion von (A) und (B) und Bildung des Polyamid-Copolymers ausreichend langen Zeitraum.

8. Verfahren nach Anspruch 7, wobei (A) und (B) in einem Gewichtsverhältnis im Bereich von 90:10-15:85, bevorzugt 85:15-25:75, weiter bevorzugt 80:20-40:60, gemischt werden.

9. Verfahren zur Herstellung eines Formteils, umfassend das Spritzgießen oder Extrusionsformen eines Polyamid-Copolymers gemäß einem der Ansprüche 1-5 oder einer Polymerzusammensetzung, die ein Polyamid-Copolymer gemäß einem der Ansprüche 1-5 umfasst.

10. Verfahren nach Anspruch 9, wobei das Formteil durch Extrusionsformen hergestellt wird.

11. Formteil, umfassend ein Polyamid-Copolymer gemäß einem der Ansprüche 1 bis 5 oder eine Polymerzusammensetzung, die ein Polyamid-Copolymer gemäß einem der Ansprüche 1-5 umfasst.

12. Formteil nach Anspruch 11, wobei es sich bei dem Formteil um ein durch Extrusionsformen hergestelltes extrudiertes Teil handelt.

13. Formteil nach Anspruch 12, wobei es sich bei dem extrudierten Teil um ein Band, ein Rohr oder ein extrudiertes Profil und vorzugsweise ein Rohr handelt.

## Revendications

1. Copolymère de polyamide constitué de motifs répétitifs issus de monomères de formation de polyamide constitués de
- 55 à 90 % en moles de 1,6-hexanediamine (appelée HMDA) et 10 à 45 % en moles de l'une ou l'autre parmi la 1,2-éthylènediamine, la 1,3-triméthylènediamine, la 1,4-tétraméthylènediamine et la 1,5-pentaméthylènediamine, ou une combinaison correspondante (appelées ensemble C2-C5 diamine), les % en moles étant par rapport à la quantité molaire combinée de HMDA et de C2-C5 diamine ;
- 50 à 85 % en moles d'acide téréphtalique (appelé TPA) et 15 à 50 % en moles d'acide isophtalique (appelé IPA), les % en moles étant par rapport à la quantité molaire combinée de TPA et IPA ;
- 0 à 10 % en moles d'un autre monomère ou d'autres monomères de formation de polyamide, les % en moles étant par rapport à la quantité molaire de monomères de formation de polyamide.

2. Copolymère de polyamide selon la revendication 1, le copolymère de polyamide étant un polymère semi-cristallin ayant
- une température de fusion (Tm) dans la plage de 275 à 335 °C ; et/ou
- une enthalpie de fusion (ΔHm) dans la plage de 30 à 90 J/g ; et/ou
- une température de transition vitreuse (Tg) dans la plage de 110 à 160 °C,
la température de fusion et l'enthalpie de fusion étant mesurées par le procédé de DSC selon la norme ISO-11357-1/3, 2011, et la température de transition vitreuse étant mesurée par le procédé de calorimétrie différentielle à balayage (DSC) selon la norme ISO-11357-1/2, 2011, toutes avec une vitesse de chauffage et de refroidissement de 20 °C/min.

3. Copolymère de polyamide selon la revendication 1 ou 2, les monomères de formation de polyamide comprenant 0 à 5 % en moles, par rapport à la quantité molaire totale de monomères de formation de polyamide, d'autres monomères de formation de polyamide.

4. Copolymère de polyamide selon l'une quelconque des revendications 1 à 3, les monomères de formation de polyamine comprenant 65 à 85 % en moles de 1,6-hexanediamine (HMDA) et 15 à 35 % en moles de l'une ou l'autre parmi la 1,2-éthylènediamine, la 1,3-triméthylènediamine, la 1,4-tétraméthylènediamine et la 1,5-pentaméthylènediamine, ou une combinaison correspondante (C2-C5 diamine) par rapport à la quantité molaire combinée de HMDA et de C2-C5 diamine.

5. Copolymère de polyamide selon l'une quelconque des revendications 1 à 4, les monomères de formation de polyamide comprenant 60 à 80 % en moles d'acide téréphtalique (TPA) et 20 à 40 % en moles d'acide isophtalique (IPA), par rapport à la quantité molaire combinée de TPA et IPA.

6. Procédé pour la préparation d'un copolymère de polyamide tel que défini dans l'une quelconque des revendications 1 à 5, comprenant une étape de mélange en fusion et transamidation ou une étape de polymérisation en fusion.

7. Procédé selon la revendication 6, comprenant les étapes de
(i) fourniture d'un polyamide semi-aromatique semi-cristallin (A) comprenant des motifs répétitifs issus de 85 à 100 % en moles d'acide téréphtalique (appelé TPA) et 0 à 15 % en moles d'acide isophtalique (appelé IPA), les % en moles étant par rapport à la quantité molaire combinée de TPA et IPA ;
(ii) fourniture d'un polyamide semi-aromatique amorphe (B) comprenant des motifs répétitifs issus de 0 à 50 % en moles d'acide téréphtalique (appelé TPA) et 50 à 100 % en moles d'acide isophtalique (appelé IPA), les % en moles étant par rapport à la quantité molaire combinée de TPA et IPA ;
(iii) mélange en fusion de (A) et (B) et maintien de (A) et (B) dans la masse fondue à une température (Tmelt) supérieure à la température de fusion (Tm) de (A) pendant une durée suffisamment longue pour mettre en réaction (A) et (B) et former le copolymère de polyamide.

8. Procédé selon la revendication 7, (A) et (B) étant mélangés en un rapport en poids dans la plage de 90 : 10 à 15 : 85, préférablement 85 : 15 à 25 : 75, plus préférablement de 80 : 20 à 40 : 60.

9. Procédé pour la fabrication d'une pièce moulée, comprenant un moulage par injection ou un moulage par extrusion d'un copolymère de polyamide tel que défini dans l'une quelconque des revendications 1 à 5, ou d'une composition de polymère comprenant un copolymère de polyamide tel que défini dans l'une quelconque des revendications 1 à 5.

10. Procédé selon la revendication 9, la pièce moulée étant fabriquée par moulage par extrusion.

11. Pièce moulée, comprenant un copolymère de polyamide tel que défini dans l'une quelconque des revendications 1 à 5, ou une composition de polymère comprenant un copolymère de polyamide tel que défini dans l'une quelconque des revendications 1 à 5.

12. Pièce moulée selon la revendication 11, la pièce moulée étant une pièce extrudée, produite par moulage par extrusion.

13. Pièce moulée selon la revendication 12, la pièce extrudée étant un ruban, un tube, un profilé extrudé, et préférablement étant un tube.
